# EUROPEAN PATENT APPLICATION

(11) **EP 1 787 512 A1**
(43) Date of publication of application: **23.05.2007**
(21) Application number: 05024463.1
(22) Date of filing: 09.11.2005
(51) Int. Cl.: A01N 1/02, G01N 33/49, G01N 33/96

(54) **Method for the cryopreservation of human blood**

(71) Applicant: Paul-Ehrlich-Institut Bundesamt für Sera und Impfstoffe, 63225 Langen (DE)
(72) Inventor: Mueller, Stephanie, Poolesville, MD 20837 (US); Montag-Lessing, Thomas, 64283 Darmstadt (DE); Spreitzer, Ingo, 65203 Wiesbaden (DE); Löschner, Bettina, 63303 Dreieich-Sprendlingen (DE); Schwanig, Michael, 61440 Oberursel (DE); Weichold, Frank, MD 20814, Bethesda MD (US)
(74) Representative: Krauss, Jan

(57) **Abstract**

The present invention relates to an improved method for cryo-preservation of human whole blood containing monocytes and lymphocytes at temperatures of between -65°C and -100°C, preferably at -80°C, whereby the function of monocytes and lymphocytes is preserved. The present invention particularly relates to a method for cryo-preservation of human whole blood containing monocytes and lymphocytes without the need for an isolation of peripheral blood mononuclear cells (PBMCs).

## Description

The present invention relates to an improved method for cryo-preservation of human whole blood containing monocytes and lymphocytes at temperatures of between -65°C and -100°C, preferably at -80°C, whereby the function of monocytes and lymphocytes is preserved. The present invention particularly relates to a method for cryo-preservation of human whole blood containing monocytes and lymphocytes without the need for an isolation of peripheral blood mononuclear cells (PBMCs).

### Background of the invention

For the clinical examination of vaccines against pathogens that are repelled by cell mediated immunity (i.e. the cellular immune status of vaccinated individuals) usually the mononuclear cells are isolated from the blood samples of vaccinated individuals. For this, highly specialized laboratories with accordingly qualified staff must be installed on-site. Furthermore, all vessels and reagents must be pyrogen-free. Usually, the cells are frozen, stored and shipped in liquid nitrogen (usually in vapor phase).

Often, the above clinical examinations are performed in developing countries (e.g. in Africa). The installation of specialized laboratories on site, recrution of suitable staff as well as the transport of samples in liquid nitrogen require a high financial and technical effort. Furthermore, the isolation of the mononuclear cells under pyrogen-free conditions is accident sensitive, an activation of the monocytes by pyrogenic substances is possible, rendering the sample worthless.

Lakey et al. (Lakey JR, Anderson TJ, Rajotte RV. Novel approaches to cryo-preservation of human pancreatic islets. Transplantation. 2001 Sep 27;72(6):1005-11.) describe the cryo-protective effect of ethylene glycol (EG) with the standard cryo-protectant, dimethyl sulfoxide (DMSO), on isolated human islet survival and function. The results demonstrate that a lower concentration of DMSO (1.5 M) allows for the cryo-preservation of human islets with superior survival and preservation of function post-culture compared with 2.0 M of DMSO and various concentrations of EG.

Human whole blood assays are increasingly employed to test immune function or detect pyrogenic contamination, since they offer advantages, such as ease of performance, few preparation artefacts and a physiological cell environment. However, the approach is often limited by the availability of freshly drawn blood, putative safety concerns in the case of infected donors and inter-individual donor differences.

EP 0 741 294 B1 describes a method for testing compounds for pyrogenic activity by contacting with whole blood and then measuring the production of endogenous pyrogens. No cryo-conservation of blood is described.

Schindler et al. (Schindler S, Asmus S, von Aulock S, Wendel A, Hartung T, Fennrich S. Cryopreservation of human whole blood for pyrogenicity testing. J Immunol Methods. 2004 Nov; 294(1-2):89-100 describe a method to produce batches of cryo-preserved blood that can be used directly after thawing without any washing steps. Mononuclear cells remained intact as shown by FACS analysis. Cytokine release could be induced by a variety of immunological stimuli. The cell preparation released higher amounts of interleukin-1beta (IL-1beta) and IL-6 compared to fresh blood, but no TNF. These differences could be attributed to the presence of the cryo-protectant dimethylsulfoxide (DMSO) alone by addition of DMSO to fresh blood. Large batches of cryo-preserved blood could be produced by mixing blood donations of up to 10 donors, independent of differing blood groups. The detection limit for the World Health Organization (WHO) lipopolysaccharides (endotoxin, LPS) reference preparation (EC-6) with regard to the induction of IL-1beta release was at least 0.5 endotoxin equivalent units (EU)/ml. Endotoxin spikes at the limit concentrations prescribed in the European Pharmacopoeia could be detected in a series of drugs, showing that the In vitro pyrogen Test (IPT) can also be run with cryo-preserved blood. Further possible applications are described that include high-throughput screening for immuno-modulators or toxins as well as preservation of patient samples for later analysis of monocyte functions.

Nevertheless, all above cited references relate to cryo-preservation by shock-freezing through plunging into liquid nitrogen (-196°C). Furthermore, it is known that the cells being preserved are often damaged during the approach to low temperatures or warming to room temperature due to solution effects and intracellular ice formation, which can be prevented only by very rapid freezing.

Furthermore, alternative pyrogen testings on the basis of the human fever reaction are established by means of incubation of a test sample with human whole blood and the production of IL-1, IL-6 or TNFα as readout. In addition, kits said for alternative pyrogen testings are available on the market (standards, buffers, ELISA etc.), but freshly drawn human blood is necessary for every experiment. Finally, as above, the technology for cryo-preservation of PBMCs in liquid nitrogen is well established, but is expensive and laborious as it requires laboratory equipment, production processes, and suitable shipping and storage.

In view of the above, there is still a need for a method for the simple conservation of whole blood, which is, nevertheless, ready to use, characterized, safe, and stable. It is therefore an object of the present invention, to provide such an improved method as well as the advantages associated with such a method and related methods.

According to a first aspect according to the present invention, the above object is solved by an improved method for cryo-preservation of mammalian whole blood, comprising providing a sample of human whole blood, providing a diluted aqueous cryo-protective agent, admixing said sample and said diluted aqueous cryo-protective agent in a ratio of between 1:2 and 2:1 in order to produce a cryo-premix, and freezing said premix at temperatures of between -65°C and -100°C in a suitable freezer in order to obtain a cryo-preserved sample of mammalian whole blood.

A method was developed in the pyrogen group of the Paul-Ehrlich-Institut, Langen, Germany, for cryo-preservation of human whole blood of between -65°C and -100°C, preferably at-80°C, whereby the monocyte function is preserved. This technology was originally developed to produce standardized and ready-to-use human blood for the use of the alternative pyrogen test in the pharmaceutical industry. Human monocytes, which were frozen at - 80°C in whole blood without prior isolation of the PBMCs using the PEI technology, keep their functionality for at least one year without showing a decline in their ability to be stimulated (as measured by the inducibility of pro-inflammatory cytokines, see Figures hereinbelow).

The first advantage of the inventive technology compared with established methods using nitrogen (liquid or gaseous) is that the costs are lower by several orders of magnitude. Instead of automatic freezers and nitrogen containers for storage and transport, only suitable, and e.g. - 80°C deep-freezers are required, both for freezing and for storage, and dry ice for transport. Thus, investments in peripheral and central labs can be saved on the one hand and high transport cost on the other.

The second advantage of the inventive technology is that samples collected from individuals can be frozen directly as whole blood without the risk of contamination. During the asservation of samples for the determination of cell-bound immunity (and for the pyrogen test), it is absolutely essential to prevent the PBMCs from being stimulated, since the specific signal can then no longer be measured due to a high noise level. In the established methods, the PBMCs are isolated by means of gradient centrifugation before cryo-preservation takes place. To prevent stimulation of the cells, pyrogen-free gradient gels must be guaranteed, which often is not the case with conventional gradients and/or test tubes. In addition, the work in the asservation lab must be absolutely sterile and pyrogen-free, which, under routine conditions, is often difficult to achieve. The latter particularly applies to labs with little experience or staff with low qualification.

The third advantage of the inventive method is that no allogenic human AB serum respectively plasma is needed in order to protect function of immune cells. For successful cryo-preservation of isolated PBMCs, the addition of human serum (obtained from donors having the blood group AB for excluding actions of blood group iso-agglutinins towards lymphocytes) is crucial. Suitable lots of AB serum have to be carefully selected because a certain percentage of them induce T cell stimulation. The best reagent in cryo-preservation of PBMCs is autologous serum. Cryo-preserving whole blood, autologous serum respective plasma is automatically contained in the sample.

Preferably, said diluted aqueous cryo-protective agent is selected from 10%-30% DMSO, preferably 20% in phosphate buffer (e.g. Sorensen buffer) or other suitable aqueous salt-free or essentially salt-free buffers. "Essentially salt-free" means that the buffer contains only trace amounts of salt(s) and/or very low amounts of salt(s) of below 10 mM. Other of those buffers are known to the person of skill in the art. Other suitable agents include hydroxyethyl-starch (HES). Without wanting to be bound by theory, the lack of salts in the buffers appears to be important for the buffer. The lack of salts is surprising, since commonly physiological concentrations of salts are regarded as obligatory (150 mM or 0.85%, respectively) for the viability of animal cells. Again, without wanting to be bound by theory, it appears that this is due to the respective dilution according to the present invention (usually and preferred 1:1).

In another embodiment of the method according to the present invention, said admixing is performed by carefully admixing said sample and said diluted aqueous cryo-protective agent. Careful mixing can be performed by slowly dropping the diluted aqueous cryo-protective agent into the sample of whole blood and mixing by inverting the tube or vessel containing the sample. Carefully shaking of the sample upon the admixture of the cryo-protective agent (such as DMSO) is preferred.

Preferably, following the admixing step, said premix is then kept at ambient temperature or between 4°C and 50°C for a time period of between 30 minutes to 180 minutes, preferably between 30 minutes to 60 minutes. It was surprisingly found that this short storage step before freezing increases the reactivity of the cells as frozen compared to samples that are frozen directly after adding the cryo-protective agent (such as DMSO). Again, without wanting to be bound by theory, it appears that this effect could be due to an improved integration of the cryo-protective agent into the cellular membranes.

Preferably, said premix is frozen at temperatures of between -75°C and -85°C, preferably at-80°C. Freezing is done in a suitable freezer, such as, for example a -80°C commercially available freezer or putting on dry ice.

In another aspect of the present invention, a method according to the invention is provided that further comprising the step of storing said cryo-preserved sample at temperatures of between -75°C and -85°C, preferably at -80°C for a time period of between 2 to 4 weeks, preferably 3 weeks. It was surprisingly found that the reactivity/viability of cells that have been stored at between -75°C and -85°C, and preferably at-80°C for a certain period of time (optimally for about 3 weeks) is slightly improved, compared to cells that have been stored for a shorter period of time.

In another embodiment of the method according to the present invention, said mammal is selected from a mouse, rat, goat, cat, dog, horse, sheep, guinea pig, hamster, monkey or human. A human is preferred.

In another aspect of the present invention, a method according to the invention is provided that further comprises the step of transporting said cryo-preserved sample of mammalian whole blood on dry ice.

Another aspect of the present invention is directed to a method for the determination of the individual immune status, especially the cell bound immunity, of vaccinated individuals, comprising a method for cryo-preservation as above.

Another aspect of the present invention is directed to a method for pyrogen testing, comprising a method for cryo-preservation as above.

Another aspect of the present invention is directed to a method for determining the stability and functionality of CD4 and CD8 T cells and other immune cells, comprising a method for cryo-preservation as above.

Yet another aspect of the present invention is directed to a method for the clinical testing of vaccines against pathogens that are rejected through cellular immunity, comprising a method for cryo-preservation as above.

Yet another aspect of the present invention is directed to a kit for performing a method as described herein, wherein said kit contains material for performing said methods, such as vials, standards, buffers, materials for ELISA, materials for Flow Cytometry, manuals, and/or materials for shipping the frozen samples.

According to the present invention, a method was developed that allows for freezing of samples of whole blood for a determination of the cell-bound immunity without further preparation, in particular without prior isolation of the mononuclear cells. The monocytes and lymphocytes of the samples are not impaired in their function. The cryo-conservation occurs without liquid nitrogen. Thereby, the asservation of individual blood samples (e.g. for the clinical examination of vaccines) becomes possible with very low financial and technical effort.

In one particular embodiment, the object of the present invention is solved in that the required cryoprotectans (e.g. DMSO) is pre-diluted (e.g. 20% in buffer such as above or phosphate buffer) and only then the blood is carefully admixed (e.g. in a ration of 1:1). Subsequently, the sample can be frozen directly at -80°C in a freezer or on dry ice. Additional auxiliaries are not required. The function (e.g. ability to stimulate with suitable markers) of monocytes and CD3-cells is maintained. The so produced cryoblood-samples are stable for at least one year.

Surprisingly, deep-frozen blood samples for the detection of the cell-bound immunity (a) no longer need to be pre-conditioned in highly specialised laboratories (isolation of the mononuclear cells), and (b) no longer need to be frozen and transported in freezers on the basis of liquid nitrogen.

The advantages of the invention consist in substantial savings of costs (approx. 90%), and labour. For the clinical examination of vaccines against pathogens that are rejected by means of cell-bound immunity (e.g. tuberculosis), no labor intensive and expensive laboratories as well as no highly qualified staff is required. The transport of the samples can occur on dry ice. Furthermore, the danger of the contamination of the samples (e.g. by non pyrogen free devices and chemicals during cellular isolation) can be essentially reduced.

For the determination of the cellular immune status of the patient, if performed, for example, at the site of examination in the doctors' office or at the internist, until now fresh blood must be taken and examined at the very same day in a specialised laboratory, requiring logistic effort, such as courier, etc.) and involving further costs. The method according to the present invention allows the asservation of the sample as required without further problems. The sample can be diagnosed later and can simply be shipped on dry ice. Similar situations can be contemplated in veterinary medicine (since this also can involve clinical testing of vaccines), and are encompassed by the scope of the present invention,

The present invention shall now be described further in the following examples with respect to the attached drawings without being limited thereto. For the purposes of the present invention, all references as cited herein are incorporated by reference in their entireties.

Figure 1 shows stability testing of cryo-preserved samples produced according to the present invention according to the examples hereinbelow.

Figure 2 shows another stability testing of cryo-preserved samples produced according to the present invention according to the examples hereinbelow.

### Examples

### Preparation of whole blood samples

Whole blood is mixed with freezing media and immediately placed into a freezer (-80°C). Fresh blood is taken with sterile and pyrogen-free heparin-containing syringes (citrate or EDTA = ethylenediamine tetraacetate can also be used as an anti-coagulans), the blood is transferred into a sterile and pyrogen vessel (e.g. Erlenmeyer-flask), DMSO in 30 mM phosphate buffer (e.g. Sorensen-buffer), pH 6.8, pre-diluted, in the same volume is added slowly and under careful shaking to the blood, the dilution is transferred into sterile and pyrogen-free cryo-tubes of 1.5 ml, the tubes are put into the -80°C freezer without further precautions (in commonly used box for tubes). A molarity of 30 mM, pH 6.8 was used in this case, a range of between 15 to 250, at a of pH 3.0 to 9.0 is preferred.

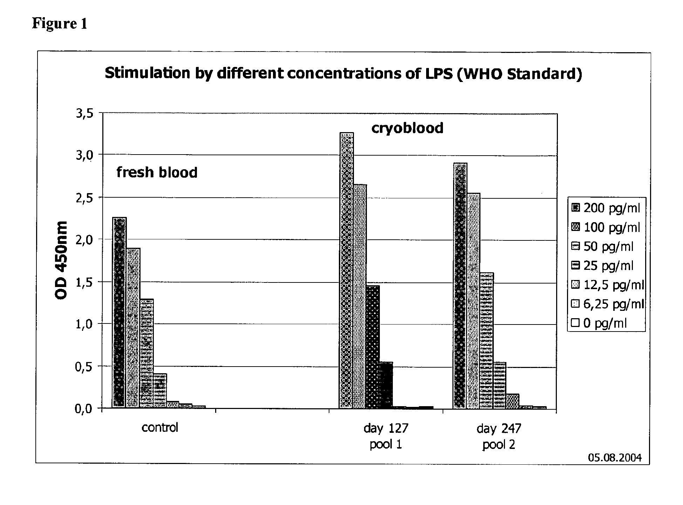

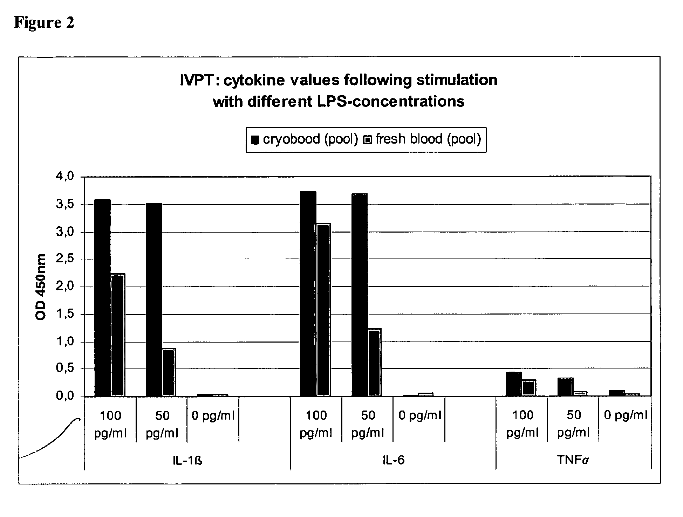

The stability data for more than 1 year has been assessed by monocyte function in ELISA (Figure 1 and Figure 2). Cryoblood is removed from the freezer, thawed at 37 °C in a drying cabinet for 15 minutes, for each well, 40 µl of cryoblood (without removing the DMSO), each of 20 µl endotoxin (LPS)-dilution and 200 µl RPMI-medium are added into a sterile and pyrogen-free microtitre plate, incubated over night in a CO₂-cabinet (5 % CO₂, 37 °C, increased humidity), the whole sample (without centrifugation, with cells and erythrocyte-debris) can be recovered and directly examined (can also be frozen for later measurements) for IL-1, IL-6 or TNF alpha in ELISA-plates. The success is analysed a) compared to a fresh blood sample of the same donor (of the day of freezing) as well as b) based on the sensitivity of the assay regarding the detection of endotoxin as well as c) by comparing different endotoxin concentrations.

Another aspect of the present invention is directed to a method for the determination of the individual immune status of vaccinated individuals, comprising a method for cryo-preservation as above. This assay can be performed as for the analysis of the functionality of T cells as described below, in addition, for example, the ratio of CD4 and CD8-cells is determined, furthermore stimulation assays with suitable antigens depending from the question to be analysed. The usually used criteria are the activation of the lymphocytes, e.g. by surface-activation markers, intracellular formation of IL-2, gamma interferon etc.

Another aspect of the present invention is directed to a method for pyrogen testing, comprising a method for cryo-preservation as above. Pyrogen testing is done in analogy to the monocyte-functional test as above. Instead of endotoxin, the samples to be examined are used.

Another aspect of the present invention is directed to a method for determining the stability and functionality of CD4 and CD8 T cells and other immune cells, comprising a method for cryo-preservation as above. Cryoblood is removed from the freezer, thawed at 37 °C in a drying cabinet for 15 minutes, 200 µl per well are added to a sterile and pyrogen-free microtitre plate, suitable concentrations of SEB (staphylococcal enterotoxin B) are added for the activation of the lymphocytes (CD4 and CD8 cells), incubated for 6 h, then the activation of the lymphocytes is measured in a flow cytometer (FACS) by formation of the surface-marker CD69 (double labelling of the cells with different fluorescent antibodies, CD4 - CD69 as well as CD8 - CD69, respectively), always compared to a fresh sample of the same donor (of the day of freezing). As a result, both CD4 as well as CD8 can readily be stimulated following cryo-conservation, and therefore the cells are viable and behave comparably to the fresh sample.

Yet another aspect of the present invention is directed to a method for the clinical testing of vaccines against pathogens that are rejected through cellular immunity, comprising a method for cryo-preservation as above. Samples of vaccinated individual, e.g. during clinical examination of a tuberculosis vaccine are asservated according to the invention at - 80°C, transferred in a suitable laboratory on dry ice, stored at - 80°C in a freezer until analysis, thawed before the assay, incubated with antigens of *Mycobacterium tuberculosis* (e.g. PPD = Purified protein of tuberculosis) in suitable concentrations, subsequently, the activation of the CD4 and CD8-cells as well as the monocytes is measured (see above), furthermore, synthetic peptides, derived from antigens of *Mycobacterium tuberculosis*, can be used in a suitable configuration (e.g. as tetramers).

## Claims

1. Method for cryo-preservation of mammalian whole blood, comprising
- providing a sample of human whole blood,
- providing a diluted aqueous cryo-protective agent,
- admixing said sample and said diluted aqueous cryo-protective agent in a ratio of between 1:2 and 2:1 in order to produce a cryo-premix, and
- freezing said cryo-premix at temperatures of between -65°C and -100°C in a suitable freezer in order to obtain a cryo-preserved sample of mammalian whole blood.

2. Method according to claim 1, wherein said diluted aqueous cryo-protective agent is selected from 10%-30% DMSO in phosphate buffer, such as Sörensen buffer or other suitable aqueous salt-free and/or essentially salt-free buffers.

3. Method according to claim 1 or 2, wherein said admixing is performed by carefully admixing said sample and said diluted aqueous cryo-protective agent.

4. Method according to any of claims 1 to 3, further comprising the step of storing said cryo-premix sample following the admixing at ambient temperature or between 4°C and 50°C for a time period of between 30 minutes to 180 minutes, preferably between 30 minutes to 60 minutes.

5. Method according to any of claims 1 to 4, wherein said cryo-premix is frozen at temperatures of between -75°C and -85°C, preferably at -80°C.

6. Method according to any of claims 1 to 5, further comprising the step of storing said cryo-preserved sample at temperatures of between -75°C and -85°C, preferably at - 80°C for a time period of between 2 to 4 weeks, preferably 3 weeks.

7. Method according to any of claims 1 to 6, wherein said mammal is a human.

8. Method according to any of claims 1 to 7, further comprising the step of transporting said cryo-preserved sample of mammalian whole blood on dry ice.

9. Method for the determination of the individual immune status of vaccinated individuals comprising a method according to any of claims 1 to 8.

10. Method for pyrogen testing, comprising a method according to any of claims 1 to 8.

11. Method for determining the stability and functionality of CD4 cells, CD8 T cells, monocytes and other immune cells, comprising a method according to any of claims 1 to 8.

12. Method for the clinical testing of vaccines against pathogens that are rejected through cellular immunity, comprising a method according to any of claims 1 to 8.
